# EUROPEAN PATENT SPECIFICATION

(11) **EP 2 594 400 B1**
(45) Date of publication and mention of the grant of the patent: **10.10.2018**
(21) Application number: 12190858.6
(22) Date of filing: 31.10.2012
(51) Int. Cl.: B32B 27/28, B32B 27/30, G02F 1/1333

(54) **Window panel for display device and display device including the window panel**
Fensterpaneel für eine Anzeigevorrichtung und Anzeigevorrichtung mit dem Fensterpaneel
Panneau de fenêtre pour dispositif d'affichage et dispositif d'affichage comprenant celui-ci

(30) Priority: 18.11.2011 KR 20110120994
(43) Date of publication of application: 22.05.2013
(73) Proprietor: Samsung Display Co., Ltd., Gyeonggi-do (KR)
(72) Inventor: Lee, Kyu-Taek, Gyeonggi-Do (KR); Han, Kwan-Young, Gyeonggi-Do (KR)
(74) Representative: Mounteney, Simon James

(56) References cited:
- WO-A1-2006/005090
- US-A1- 2007 122 631
- US-A1- 2009 317 592
- US-A1- 2010 060 833

## Description

### BACKGROUND

### 1. Field

The invention relates to a window panel for a display device and a display device including the same.

### 2. Description of Related Art

Currently, known display devices include a liquid crystal display (LCD), a plasma display panel (PDP), an organic light emitting diode display (OLED), a field effect display (FED), an electrophoretic display device, and the like. Such a display device typically includes a display module for displaying an image and a window panel protecting the display module. Glass may be used as the window panel. Unfortunately, since glass may be easily broken by external impact, a portable device (such as a mobile phone) formed with such a glass window panel may be easily damaged. Therefore, window panels made of plastic materials instead of glass have been researched.

When a display device having a touch screen function is used, fingers or a sharp tool such as a pen may frequently contact on one side of the window panel. In this case, a scratch may be easily generated at the surface of a window panel made of plastic.

WO 2006/0050090 A1, US 2009/0317592 A1, and US 2007/122631 A1 disclose a flexible substrate having a stacked body in order to improve impact resistance.

### SUMMARY

An aspect of an embodiment of the present invention is directed toward a window panel capable of reducing surface scratches while maintaining impact resistance.

Another aspect of an embodiment of the present invention is directed toward a display device including the window panel.

According to one embodiment, there is provided a window panel for a display device as set out in Claim 1. Optional features of the invention are set out in Claims 2 to 9.

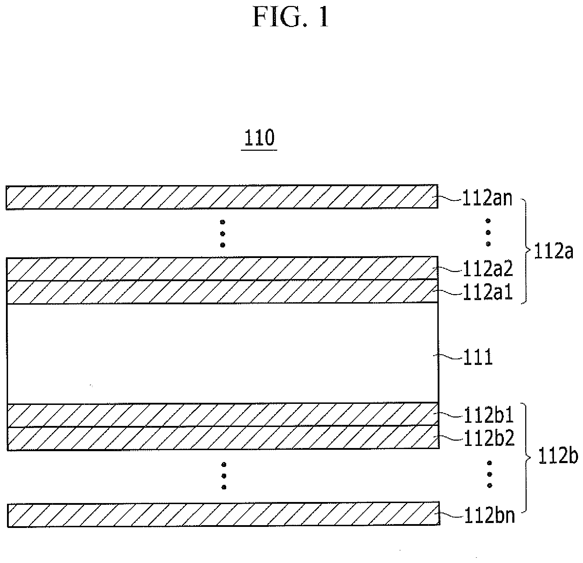

### BRIEF DESCRIPTION OF THE DRAWING

The drawing is a cross-sectional view of a window panel for a display device according to one embodiment of the invention.

### DETAILED DESCRIPTION

The present invention will be described by way of example with reference to the accompanying drawing, in which embodiments of the invention are shown. The invention may, however, be embodied in many different forms and is not limited to the embodiments set forth herein.

In the drawing, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

The provided drawing is a cross-sectional view of a window panel for a display device according to one embodiment of the invention.

The illustrated window panel (110) for the display device includes a plastic substrate 111, a hard coating layer 112a formed on one side of the plastic substrate 111, and a hard coating layer 112b formed on the other side of the plastic substrate 111.

The plastic substrate 111 may be made of a polymer compound, for example polyimide, polyacrylate, polyethyleneetherphthalate, polyethylene naphthalate, polycarbonate, polyarylate, polyetherimide, polyethersulfone, polymethyl(meth)acrylate, cellulose triacetate, polyvinylidene chloride, polyvinylidene fluoride, an ethylene-vinylalcohol copolymer, or a combination thereof.

The hard coating layers 112a and 112b each include at least two continuously deposited layers (112a1, 112a2, ..., 112an, 112b1, 112b2,..., 112bn).

One of the hard coating layers 112a and 112b may be omitted.

Each layer (112a1, 112a2, ..., 112an, 112b1, 112b2,..., 112bn) constituting the hard coating layers 112a and 112b may be made of the same material. For example, each layer constituting the hard coating layers 112a and 112b may be made of an organic compound or an organic/inorganic composite compound, wherein the organic compound may include an acryl-based compound, an epoxy-based compound or a combination thereof, and the organic/inorganic composite compound may include a silicon compound such as polysilsesquioxane, and wherein at least two of the layers include a different material, a first layer including an acryl-based compound, an epoxy-based compound or a combination thereof, and a second layer including polysilsesquioxane.

Each layer (112a1, 112a2, ..., 112an, 112b1, 112b2,..., 112bn) constituting the hard coating layers 112a and 112b may have a thickness of about 10 to about 20 µm. In one embodiment, as each layer has a thickness of the above range, high surface hardness of each of the hard coating layers 112a and 112b can be realized without generating bending.

Each layer (112a1, 112a2, ..., 112an, 112b1, 112b2,..., 112bn) constituting the hard coating layers 112a and 112b may be made of different material. For example, a part of the hard coating layers 112a and 112b may be made of an organic compound such as an acryl-based compound, an epoxy-based compound or a combination thereof, and the other part of the hard coating layers 112a and 112b may be made of an organic/inorganic composite compound such as polysilsesquioxane. At this time, the layers made of different materials may be alternatively deposited.

Each layer (112a1, 112a2,..., 112an, 112b1, 112b2, ..., 112bn) constituting the hard coating layers 112a and 112b made of an organic compound (such as an acryl-based compound, an epoxy-based compound or a combination thereof) may have a thickness of about 5 to about 30 µm, and each layer (112a1, 112a2,..., 112an, 112b1, 112b2, ..., 112bn) constituting the hard coating layers 112a and 112b made of an organic/inorganic composite compound (such as polysilsesquioxane) may have a thickness of about 5 to about 30 µm. In one embodiment, as each layer has a thickness of the above range, the hard coating layers 112a and 112b may exhibit high surface hardness without generating bending.

In the hard coating layers 112a and 112b, the stacking structure of at least one layer positioned between the plastic substrate 111 and the top layer may have different surface hardness than the top layer (e.g., layer 112an or 112bn), and the surface hardness of the top layer may be higher than the surface hardness of the stacking structure of at least one layer positioned thereunder.

The surface hardness of the hard coating layers 112a and 112b including at least two layers may be higher than the surface hardness of each layer constituting the hard coating layers 112a and 112b.

For example, the hard coating layers 112a and 112b may have surface hardness of 6H or higher, particularly 6H to 8H. Meanwhile, each layer constituting the hard coating layers 112a and 112b may have surface hardness of 4H to 6H. Wherein, the surface hardness is the result of measuring under 1kg load using a pencil hardness tester (manufacturer: BMS Tech).

The hard coating layers 112a and 112b may respectively include two to five continuously deposited layers.

The hard coating layers 112a and 112b may have impact resistance of at least about 20 cm, by a Ball Drop measuring device which drops a weight of about 130g.

Here, the relationship between the surface hardness and the impact resistance may be a trade-off relationship. That is, if surface hardness is high, impact resistance is low, and if impact resistance is high, surface hardness is low.

Thus a window panel for a display device 100 according to an embodiment of the invention may simultaneously satisfy surface hardness and impact resistance, by including the hard coating layers 112a and 112b positioned on at least one side of the plastic substrate 111 and having at least two continuously deposited layers.

The above explained window panel may be applied for various display devices.

The window panel may be disposed on a display module, wherein the display module may include a liquid crystal display module, an organic light emitting display module, a plasma display module, an electric field effect display module, an electrophoresis display module, and the like.

The following examples illustrate the present invention in more detail. These examples, however, are not in any sense to be interpreted as limiting the scope of the invention.

### Formation of Window Panel

### Example 1 (not falling with the scope of the appended claims)

A polymethylmethacrylate (PMMA) substrate was dipped in and coated therewith a polymer solution formed of a mixture of an acrylic resin, an epoxy resin and methyl ethyl ketone (MEK), and then, dried.

The coating and drying process was additionally repeated four times to form a hard coating layer having a total of five layers.

### Example 2

A polymethylmethacrylate (PMMA) substrate was dipped in a polymer solution formed of a mixture of an acrylic resin, an epoxy resin and methyl ethyl ketone, and dried to form a hard coating layer having one layer.

Subsequently, the substrate was dipped in a polysilsesquioxane solution, and dried to form a hard coating layer having two layers.

### Example 3

A polymethylmethacrylate (PMMA) substrate was dipped in a polymer solution formed of a mixture of an acrylic resin, an epoxy resin and methyl ethyl ketone, and dried to form a hard coating layer having one layer.

Subsequently, the substrate on which the hard coating layer of one layer is formed was dipped in a polysilsesquioxane solution, and dried to form a hard coating layer having two layers.

Subsequently, the substrate on which the hard coating layer having the two layers is formed was dipped in a polymer solution, and dried to form a hard coating layer having three layers.

### Comparative Example 1

A polymethylmethacrylate (PMMA) substrate was dipped in a polymer solution formed of a mixture of an acrylic resin, an epoxy resin and methyl ethyl ketone, and dried to form a hard coating layer having a single layer with a thickness of about 5 µm.

### Comparative Example 2

A polymethylmethacrylate (PMMA) substrate was dipped in a polymer solution mixing an acrylic resin, an epoxy resin and methyl ethyl ketone (MEK), and dried to form a hard coating layer having a single layer with a thickness of about 10 µm.

### Comparative Example 3

A polymethylmethacrylate (PMMA) substrate was dipped in a polysilsesquioxane solution, and dried to form a hard coating layer having a single layer with a thickness of about 10 µm.

### Measure of Surface Hardness - 1

Surface hardnesses of the window panels of Example 1 and Comparative Examples 1 and 2 were measured under 1kg load using a pencil hardness tester (manufacturer: BMS Tech).

The thickness and the surface hardness of the hard coating layer are described in Table 1.

**Table 1**

| | Coating (times) | Thickness ( µ m) | Surface Hardness (H) |
|---|---|---|---|
| Example 1 | 1 | 12.3 | 5 |
| | 2 | 17.2 | 6 |
| | 3 | 19.5 | 6 |
| | 4 | 19.3 | 6 |
| | 5 | 17.1 | 7 |
| Comparative Example 1 | 1 | 5 | 4 |
| Comparative Example 2 | 1 | 10 | 5 |

Referring to Table 1, it may be seen that the window panels according to Example 1 wherein two or more layers are deposited have surface hardness of 6H to 7H, while the window panels according to Comparative Examples 1 and 2 respectively have surface hardness of 4H and 5H. Thus, it is confirmed that if a hard coating layer having two or more deposited layers is applied, surface hardness may be improved compared to the case wherein a hard coating layer of a single layer is applied.

### Measure of Surface hardness - 2

Surface hardnesses of the window panels according to Examples 2 and 3 and Comparative Examples 2 and 3 were measured.

The results are described in Table 2.

**Table 2**

| | Thickness (µm) | Surface Hardness (H) |
|---|---|---|
| Example 2 | 19.1 | 7 |
| Example 3 | 27.9 | 7 |
| Comparative Example 2 | 10 | 5 |
| Comparative Example 3 | 10 | 5 |

Referring to Table 2, it may be seen that the surface hardness of the window panels according to Examples 2 and 3 is 7H, while the surface hardness of the window panels according to Comparative Examples 2 and 3 is 5H. Thus, it is confirmed that if a hard coating layer having two or more deposited layers is applied, surface hardness is improved compared to the case wherein a hard coating layer of a single layer is applied.

### Measure of Impact Resistance

Using a Ball Drop measuring device which drops a weight of 130g on the center of the window panels according to Examples 1 to 3, impact resistance was measured.

As the result, it is confirmed that all window panels according to Examples 1 to 3 and Comparative Examples 1 to 3 were not broken, even at a height of 20cm or more.

Thus, it is may be seen that the window panels according to Examples 1 to 3 have impact resistance equal to the window panels according to Comparative Examples 1 to 3.

As explained, it may be seen that the window panels according to Examples 1 to 3 have improved surface hardness while maintaining impact resistance equal to the window panels according to Comparative Examples 1 to 3. Therefore, the window panels according to Examples 1 to 3 may satisfy both impact resistance and surface hardness having the trade-off relationship, thus improving surface scratch resistance characteristics without reducing external impact resistance characteristics.

While the invention has been described in connection with what is presently considered to be practical embodiments of the invention, it is to be understood that the invention is not limited to the disclosed embodiments, but, on the contrary, is intended to include various modifications and equivalent arrangements included within the scope of the appended claims.

## Claims

1. A window panel for a display device comprising
a plastic substrate (111), and
a hard coating layer (112a, 112b) on a side of the plastic substrate, the hard coating layer comprising at least two layers (112a1, 112a2.... 112an; 112b1, 112b2....112bn) which contact each other;
wherein the at least two layers of the hard coating layer comprise at least two layers each including a different material;
**characterized in that** the at least two layers each including a different material comprise a first layer including an acryl-based compound, an epoxy-based compound or a combination thereof, and a second layer including polysilsesquioxane.

2. A window panel for a display device according to claim 1, wherein the first layer has a thickness of about 5 to about 30 µm, and
the second layer has a thickness of about 5 to about 30 µm.

3. A window panel for a display device of claim 1 or 2, wherein the first layer is positioned between the plastic substrate and the second layer, and the second layer has a higher surface hardness than that of the first layer.

4. A window panel for a display device according to claim 3, wherein the second layer is a top layer of the hard coating layer.

5. A window panel for a display device according to any preceding claim, wherein the at least two layers of the hard coating layer comprise two to five layers.

6. A window panel for a display device according to any preceding claim, wherein the hard coating layer has surface hardness of about 6H to 8H.

7. A window panel for a display device according to any preceding claim, wherein the hard coating layer has impact resistance of at least 20cm, as measured using a Ball Drop measuring device which drops a weight of 130g.

8. A window panel for a display device according to any preceding claim, wherein another hard coating layer is on another side of the plastic substrate and comprises at least two layers which contact each other.

9. A display device comprising a window panel according to any preceding claim.

## Patentansprüche

1. Fensterfeld für eine Anzeigevorrichtung, umfassend
ein Kunststoffsubstrat (111), und
eine Hartbeschichtung (112a, 112b) auf einer Seite des Kunststoffsubstrates, wobei die Hartbeschichtung mindestens zwei Schichten (112a1, 112a2 ... 112an; 112b1, 112b2 ... 112bn) umfasst, die miteinander in Kontakt sind;
wobei die mindestens zwei Schichten der Hartbeschichtung mindestens zwei Schichten umfassen, die jeweils ein unterschiedliches Material umfassen;
**dadurch gekennzeichnet, dass** die mindestens zwei Schichten, die jeweils ein unterschiedliches Material umfassen, eine erste Schicht, umfassend eine Verbindung auf Acrylbasis, eine Verbindung auf Epoxidbasis oder eine Kombination davon, und eine zweite Schicht, umfassend Polysilsesquioxan, umfassen.

2. Fensterfeld für eine Anzeigevorrichtung nach Anspruch 1, wobei die erste Schicht eine Dicke von etwa 5 bis etwa 30 µm aufweist, und
die zweite Schicht eine Dicke von etwa 5 bis etwa 30 µm aufweist.

3. Fensterfeld für eine Anzeigevorrichtung nach Anspruch 1 oder 2, wobei die erste Schicht zwischen dem Kunststoffsubstrat und der zweiten Schicht positioniert ist, und die zweite Schicht eine höhere Oberflächenhärte als die erste Schicht aufweist.

4. Fensterfeld für eine Anzeigevorrichtung nach Anspruch 3, wobei die zweite Schicht eine obere Schicht der Hartbeschichtung ist.

5. Fensterfeld für eine Anzeigevorrichtung nach einem vorangehenden Anspruch, wobei die mindestens zwei Schichten der Hartbeschichtung zwei bis fünf Schichten umfassen.

6. Fensterfeld für eine Anzeigevorrichtung nach einem vorangehenden Anspruch, wobei die Hartbeschichtung eine Oberflächenhärte von etwa 6H bis 8H aufweist.

7. Fensterfeld für eine Anzeigevorrichtung nach einem vorangehenden Anspruch, wobei die Hartbeschichtung Schlagfestigkeit von mindestens 20 cm, gemessen unter Verwendung einer Kugelfallmessvorrichtung, die ein Gewicht von 130 g fallen lässt, aufweist.

8. Fensterfeld für eine Anzeigevorrichtung nach einem vorangehenden Anspruch, wobei sich eine weitere Hartbeschichtung auf einer anderen Seite des Kunststoffsubstrates befindet und mindestens zwei Schichten, die miteinander in Kontakt sind, umfasst.

9. Anzeigevorrichtung, umfassend ein Fensterfeld nach einem vorangehenden Anspruch.

## Revendications

1. Panneau de fenêtre pour un dispositif d'affichage comprenant
un substrat en plastique (111), et
une couche de revêtement dur (112a, 112b) sur un côté du substrat en plastique, la couche de revêtement dur comprenant au moins deux couches (112a1, 112a2 ... 112an ; 112b1, 112b2 ... 112bn) qui sont en contact l'une avec l'autre ;
dans lequel les au moins deux couches de la couche de revêtement dur comprennent au moins deux couches incluant chacune un matériau différent ;
**caractérisé en ce que** les au moins deux couches incluant chacune un matériau différent comprennent une première couche incluant un composé à base d'acryle, un composé à base d'époxy ou une combinaison de ceux-ci, et une seconde couche incluant un polysilsesquioxane.

2. Panneau de fenêtre pour un dispositif d'affichage selon la revendication 1, dans lequel la première couche présente une épaisseur d'environ 5 à environ 30 µm, et
la seconde couche présente une épaisseur d'environ 5 à environ 30 µm.

3. Panneau de fenêtre pour un dispositif d'affichage selon la revendication 1 ou 2, dans lequel la première couche est positionnée entre le substrat en plastique et la seconde couche, et la seconde couche présente une dureté superficielle plus élevée que celle de la première couche.

4. Panneau de fenêtre pour un dispositif d'affichage selon la revendication 3, dans lequel la seconde couche est une couche supérieure de la couche de revêtement dur.

5. Panneau de fenêtre pour un dispositif d'affichage selon l'une quelconque des revendications précédentes, dans lequel les au moins deux couches de la couche de revêtement dur comprennent de deux à cinq couches.

6. Panneau de fenêtre pour un dispositif d'affichage selon l'une quelconque des revendications précédentes, dans lequel la couche de revêtement dur présente une dureté superficielle d'environ 6 H à 8 H.

7. Panneau de fenêtre pour un dispositif d'affichage selon l'une quelconque des revendications précédentes, dans lequel la couche de revêtement dur présente une résistance au choc d'au moins 20 cm, telle que mesurée à l'aide d'un dispositif de mesure de chute de la bille qui fait chuter un poids de 130 g.

8. Panneau de fenêtre pour un dispositif d'affichage selon l'une quelconque des revendications précédentes, dans lequel une autre couche de revêtement dur se trouve sur un autre côté du substrat en plastique et comprend au moins deux couches qui sont en contact l'une avec l'autre.

9. Dispositif d'affichage comprenant un panneau de fenêtre selon l'une quelconque des revendications précédentes.
